# EUROPEAN PATENT APPLICATION

(11) **EP 2 019 263 A1**
(43) Date of publication of application: **28.01.2009**
(21) Application number: 06761343.0
(22) Date of filing: 03.07.2006
(51) Int. Cl.: F23D 1/00

(54) **A PULVERIZED COAL BURNER WITH A BAFFLE**

(30) Priority: 17.05.2006 CN 200620103773 U
(71) Applicant: Hangzhou Yineng Energy Retrenchment Technology Co., Hangzhou, Zhejiang 310-013 (CN)
(72) Inventor: HUANG, Yuming, Zhejiang 310014 (CN); LI, Fengrui, Zhejiang 310014 (CN); FANG, Lei, Zhejiang 310014 (CN)
(74) Representative: Weihs, Bruno Konrad
(86) International application number: PCT/CN2006/001538
(87) International publication number: WO 2007/131392

(57) **Abstract**

This invention refers to a kind of coal powder burner body with partition, which includes the burner body and the burning chamber placed into the burner body, a high-temperature flame-guiding pipe extended into the burning chamber. The features of the invention can be described as follows: the inlet of the burner body is connected with an elbow, and there is an arc partition in the burner body. The transverse section of the arc partition is C shaped or - shaped; the internal wall of the burning chamber has a ring-shaped striking block; the burner body has a membrane air burning chamber at the outlet, and the membrane air burning chamber has a ring-shaped inlet. Compared with the existing technology, the burner of such structure has the following advantages: 1. simple structure, low production cost; 2. the coal powder is easily concentrated into the burning chamber, thus increasing the flame temperature and burning efficiency, and achieving the purpose of energy saving.

## Description

### Technical field

This invention belongs to a kind of coal powder burner, specifically belongs to burner used for starting ignition of coal powder boiler of the power station and burner for low-load stable burning, and at the same time it can be used as the main burner.

### The background technology

At present, the coal supply is in shortage. The quality of coal used for boiler can hardly be guaranteed, resulting in serious slag forming in boiler in process of high-load operation, but supplementary burning by oil is necessary during low-load operation that seriously influenced the safe and economic operation of the power station boiler. The burner is the key equipment for ignition of the power station boiler and stable burning. In order to decrease fuel oil consumption for starting the power station boiler and maintaining stable burning process, the development of a kind of coal powder burner that can increase burning efficiency in great margin and its wide application to the power station boiler has become an urgent demand.

### Content of the invention

The problem to be solved by this invention is: providing a kind of coal powder burner with partition, which has simple structure, long service life and can increase burning efficiency.

In order to solve the above-mentioned technical problem, this invention adopts the following technical scheme: a kind of coal powder burner with partition including the burner body, the burning chamber placed into the burner body, a high-temperature flame-guiding pipe extended into the burning chamber, the burner body is connected with the elbow at the inlet and there is an arc partition in the elbow; with the features: the transverse section of the arc partition is C shaped.

In order to solve the above-mentioned technical problem, this invention also adopts the following further technical scheme:
The internal wall of the burning chamber has ring-shaped striking block.

The burner body has a membrane air burning chamber at the outlet of the burner body, and the membrane air burning chamber also has a ring-shaped inlet.

Compared with the existing technology, burner of such structure has the following advantages: 1. simple structure, low production cost; 2. the coal powder is easily concentrated into the burning chamber, thus increasing the flame temperature and burning efficiency, reaching the objective of energy saving.

### Description of the attached figures

Figure 1 is the longitudinal section view of this invention.
Figure 2 is the view of figure 1 in A direction.
Figure 3 is the B-B section view of figure 1.

### Concrete implementation method

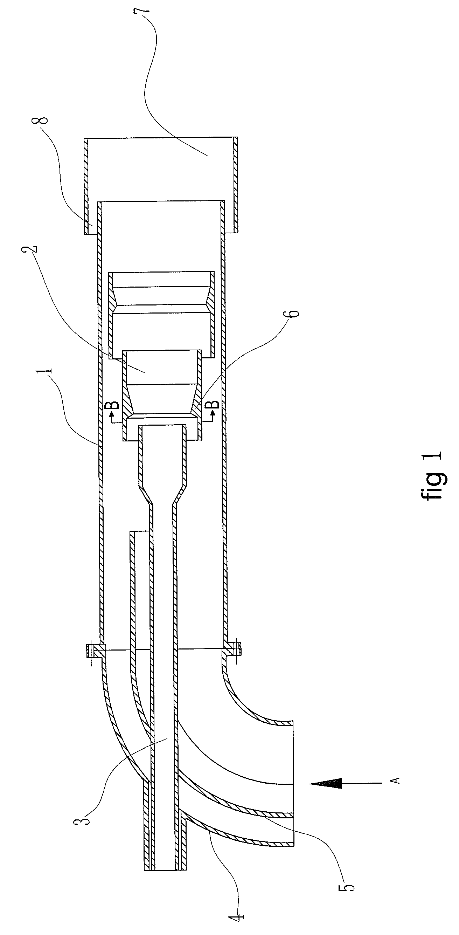

Referring to figure 1, this invention includes the burner body 1 and the burning chamber 2 placed into the burner body 1; a high-temperature flame-guiding pipe stretched into the burning chamber 2; the burner body 1 is connected with the elbow 4 at the inlet; there is an arc partition 5 in the elbow 4.

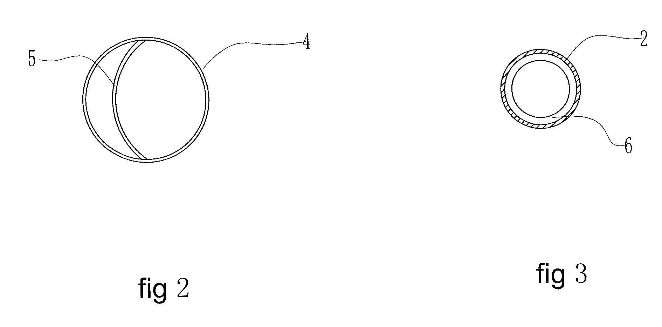

Referring to figure 2, figure 2 is the view of figure 1 in A direction, the transverse section of the arc partition is C shaped or - shaped. This partition has two functions: guiding the stream on one hand, thus decreasing resistance of the coal powder burner, and on the other hand, because of the centrifugal action of the elbow, the most coal powder is concentrated into the concave surface of the arc partition, and is successfully conveyed into the burning chamber, the high-temperature flame-guiding pipe guides a high-temperature air stream into the burning chamber; because of high concentration and low ignition point of the coal powder, the coal powder can be ignited by the small stream of high-temperature air.

Referring to figure 3, The internal wall of the burning chamber 2 has a striking block 6; the coal powder enters the burning chamber 2, impacts the striking block 6 and is concentrated in the center, thus playing a role of strengthening mixed burning.

The burner body 1 has a membrane air burning chamber 7 at its outlet, and the membrane air burning chamber 7 has a ring-shaped inlet 8; a relatively low-temperature cooling air stream enters the membrane air burning chamber 7 from the ring-shaped inlet 8 for cooling the wall surface of the burner body 1, thus extending service life of the burner.

According to the type of coal, this invention can set multi-grade burning chamber. For soft coal, it is possible to adopt 2-grade burning chamber, and for anthracite, it is possible to adopt 3-grade burning chamber; sue of membrane air burning chamber is considered according to type of coal.

This burner is used for starting ignition of coal powder boiler of the power station and for low-load stable burning, and at the same time it can be used both as the supplementary burner and as the main burner. It has advantages of simple structure and low production cost, and is suitable for application and popularization for boilers of the power station.

The above-mentioned example is only used for description of this invention, but not means restriction to this invention. Under precondition of no deviation from spirit and scope of this invention, the common technicians in corresponding realm can make various changes and modifications. Therefore, all equal technologies also belong to the scope of this invention. The protection scope of this invention shall be restricted by the following claims.

## Claims

1. A kind of coal powder burner with partition, comprised of the burner body (1), the burning chamber (2) placed into the burner body (1), a high-temperature flame-guiding pipe (3) extended into the burning chamber (2), with the features: the burner body (1) is connected with the elbow at the inlet, and there is an arc partition (5) in the elbow (4).

2. The kind of coal powder burner with partition as described in Claim 1 with the features: the transverse section of the arc partition (5) is C shaped or - shaped.

3. The kind of coal powder burner with partition as described in Claim 1 or Claim 2 with the features: the internal wall of the burning chamber (2) has a ring-shaped striking block (6).

4. The kind of coal powder burner with partition as described in Claim 1 or Claim 2 with the features: there is a membrane air burning chamber (7) at the outlet of the burner body (1), and the membrane air burning chamber (7) also has a ring-shaped inlet (8).

5. The kind of coal powder burner with partition as described in Claim 3 with the features: there is a membrane air burning chamber (7) at the outlet of the burner body (1), and the membrane air burning chamber has a ring-shaped inlet (8).
